# EUROPEAN PATENT APPLICATION

(11) **EP 4 822 929 A1**
(43) Date of publication of application: **14.10.2026**
(21) Application number: 26170799.6
(22) Date of filing: 06.04.2026
(51) Int. Cl.: H02H 9/06, H01T 4/10, H01T 19/02, H01T 21/06, H02G 13/00

(54) **METHOD, SURGE ARRESTER, AND SYSTEMS FOR OPTIMIZING LIGHTNING PROTECTION OF OVERHEAD DISTRIBUTION LINES AND EQUIPEMENT**

(30) Priority: 07.04.2025 SA 125003676
(71) Applicant: Saudi Electricity Company, 13342 Riyadh (SA)
(72) Inventor: Anwer, Murad Muhammad, Riyadh (SA); Tiro, Mohammed Rafiq, Jeddah (SA)
(74) Representative: Lapienis, Juozas

(57) **Abstract**

Present disclosure discloses a method, a surge arrester, and systems for optimizing lightning protection of overhead distribution line and equipment. The method comprises receiving a plurality of overhead distribution system parameters related to an existing overhead distribution line structure from one or more sources. Thereafter, the method comprises determining one or more output parameters based on the plurality of overhead distribution system parameters. Lastly, the method comprises determining at least one optimized lightning protection configuration for the existing overhead distribution line structure using at least one of the one or more output parameters, one or more surge arresters, a critical flashover voltage, and a shielding wire. The optimized lightning protection configuration comprises different types of system including the surge arrester for optimizing lightning protection of overhead distribution line and equipment.

## Description

### TECHNICAL FIELD

The present subject matter generally relates to an overhead distribution system, more particularly, to a method, a surge arrester, and systems for optimizing lightning protection of overhead distribution lines and equipment.

### BACKGROUND OF THE INVENTION

Generally, frequent lightening may damage overhead distribution system and lead to outages. Lightning is relatively frequent in places such as southwestern Saudi Arabia and is thus a leading contributor to overhead distribution system damage and outages. For instance, the Abha region of Saudi Arabia is located in a high altitude area, experiencing a maximum ground flash density (GFD) of 12 flashes per km per year, which is much higher than the rest of Saudi Arabia. This high level of lightning increases the likelihood of outages of an overhead distribution system. Additionally, based on analysis of outage data, it was observed that lightning was the leading cause of outage and the leading cause of Customer Minutes Lost (CML).

The type of damages that lightning can cause includes:

Permanent damage: Lightning can cause permanent damage to line and/or equipment insulation. This is normally uncommon, but lightning can damage insulators or fail equipments like transformers.

Arrester failures: High-magnitude lightning strokes can fail surge arresters. Normally, these arresters have disconnects that should operate to allow a successful reclose, but sometimes these fail to clear, thus leaving a permanent fault requiring an interruption.

Fuse operation: If a lightning-caused fault blows a fuse, then that is a sustained interruption without any damage to equipment. In such situation, a crew will have to replace the blown fuse.

Reclosing misoperation: If reclosing is too quick, or misoperates, the arrester circuit would have a sustained interruption. Some lightning events involve multiple strokes that last for more than one second leading to reclosing misoperation.

Conductor slap: A lightning-caused fault may cause conductors to start swinging. Conductors on a span upstream could slap together and cause a second (or third) fault. This could lead to a circuit lockout. This is most common with (1) spans with high sag in conductors, (2) high fault currents, (3) tight conductor spacings, and (4) smaller conductors.

Burndowns or other fault damage: A lightning-caused fault may burn down overhead conductors. This is most common with (1) high fault currents, (2) longer fault durations, (3) smaller conductors, and (4) anything that prohibits movement of an arc. Fault currents could also damage inline splices and cause them to separate.

Many of the above-mentioned issues may be avoided by increasing the insulation level of the overhead system, application of appropriately sized arresters, or by decreasing ground resistance. However, all these approaches are challenging to apply to the existing overhead distribution system. Hence, analysis to reduce lightning caused outages becomes necessary.

The information disclosed in this background of the disclosure section is for enhancement of understanding of the general background of the invention and should not be taken as an acknowledgement or any form of suggestion that this information forms the prior art already known to a person skilled in the art.

### GENERAL DESCRIPTION OF THE INVENTION

Embodiments of the present disclosure address the problems associated with lightning caused outages on the overhead distribution system.

In an embodiment, the present disclosure relates to a method for optimizing lightning protection of overhead distribution lines and equipment. The method comprising receiving a plurality of overhead distribution system parameters related to an existing overhead distribution line structure from one or more sources. Thereafter, the method comprising determining one or more output parameters based on the plurality of overhead distribution system parameters. Lastly, the method comprising determining at least one optimized lightning protection configuration for the existing overhead distribution line structure using at least one of the one or more output parameters, one or more surge arresters, a critical flashover voltage, and a shielding wire.

In another embodiment, the present disclosure relates to a surge arrester. The surge arrester comprising a lightning arrester with a first end connected to a crossarm of an electric pole and a second end connected to a phase conductor by a cable, and a plurality of magnetic discharge rings. A first magnetic discharge ring of the plurality of magnetic discharge rings is connected to the first end of the lightning arrester and a second magnetic discharge ring of the plurality of magnetic discharge rings is connected to the second end of the lightning arrester. Each of the first magnetic discharge ring and the second magnetic discharge ring is connected with a tap lead oriented towards each other.

In yet another embodiment, the present disclosure relates to a system for optimizing lightning protection of overhead distribution lines and equipment. The system comprising a multi-phase distribution line mounted on an electric pole comprising a plurality of phase conductors, and a plurality of surge arresters, wherein each surge arrester of the plurality of surge arresters is connected to each individual phase conductor of the plurality of phase conductors. Each surge arrester of the plurality of surge arresters comprises a lightning arrester with a first end connected to a crossarm of the electric pole and a second end connected to a phase conductor by a cable, and a plurality of magnetic discharge rings. A first magnetic discharge ring of the plurality of magnetic discharge rings is connected to the first end of the lightning arrester and a second magnetic discharge ring of the plurality of magnetic discharge rings is connected to the second end of the lightning arrester. Each of the first magnetic discharge ring and the second magnetic discharge ring is connected with a tap lead oriented towards each other.

In an embodiment, the present disclosure relates to a system for optimizing lightning protection of overhead distribution lines and equipment. The system comprising a multi-phase distribution line mounted on an electric pole comprising a plurality of phase conductors, wherein one of the plurality of phase conductors is arranged at a first plane and rest of the phase conductors of the plurality of phase conductors are oriented at a second plane parallel to the first plane on a crossarm of the electric pole, and a surge arrester connected to one of the plurality of phase conductors arranged at the first plane. The surge arrester comprises a lightning arrester with a first end connected to a crossarm of the electric pole and a second end connected to a center phase conductor by a cable, and a plurality of magnetic discharge rings. A first magnetic discharge ring of the plurality of magnetic discharge rings is connected to the first end of the lightning arrester and a second magnetic discharge ring of the plurality of magnetic discharge rings is connected to the second end of the lightning arrester. Each of the first magnetic discharge ring and the second magnetic discharge ring is connected with a tap lead oriented towards each other.

In another embodiment, the present disclosure relates to a system for optimizing lightning protection of overhead distribution lines and equipment. The system comprising a multi-phase distribution line mounted on an electric pole comprising a plurality of phase conductors, wherein each phase conductor of the plurality of phase conductors is separated from an adjacent phase conductor along a direction perpendicular to the electric pole, and a surge arrester is connected to one phase conductor of the plurality of phase conductors, wherein the one phase conductor is proximal to a top end of the electric pole. The surge arrester comprises a lightning arrester with a first end connected to a crossarm of the electric pole and a second end connected to the one phase conductor by a cable, and a plurality of magnetic discharge rings. A first magnetic discharge ring of the plurality of magnetic discharge rings is connected to the first end of the lightning arrester and a second magnetic discharge ring of the plurality of magnetic discharge rings is connected to the second end of the lightning arrester. Each of the first magnetic discharge ring and the second magnetic discharge ring is connected with a tap lead oriented towards each other.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The accompanying drawings, which are incorporated in and constitute a part of this disclosure, illustrate exemplary embodiments and together with the description, serve to explain the disclosed principles. The same numbers are used throughout the figures to reference like features and components. Some embodiments of system and/or methods in accordance with embodiments of the present subject matter are now described below, by way of example only, and with reference to the accompanying figures.
FIG. 1 illustrates an exemplary environment for optimizing lightning protection of overhead distribution lines and equipment in accordance with some embodiments of the present disclosure.
FIG. 2 shows a detailed block diagram of a lightning protection optimizer system in accordance with some embodiments of the present disclosure.
FIG. 3 illustrates a flowchart showing a method for optimizing lightning protection of overhead distribution lines and equipment in accordance with some embodiments of present disclosure.
FIG. 4a shows an illustration of a surge arrester in accordance with some embodiments of the present disclosure.
FIG. 4b shows a test circuit to test a surge arrester's recovery after an impulse in accordance with some embodiments of the present disclosure.
FIG. 4c shows a graph of a surge arrester's recovery after an impulse in accordance with some embodiments of the present disclosure.
FIG. 5a shows an illustration of first phase conductor positions in accordance with some embodiments of the present disclosure.
FIGS. 5b to 5c illustrate percentage of flashovers as a function of ground resistance and insulation variations determined for first phase conductor positions of FIG. 5a in accordance with some embodiments of the present disclosure.
FIG. 5d shows an illustration of first phase conductor positions with a shielding wire in accordance with some embodiments of the present disclosure.
FIGS. 5e to 5f illustrate percentage of flashovers as a function of ground resistance and insulation variations determined for first phase conductor positions of FIG. 5d with a shielding wire in accordance with some embodiments of the present disclosure.
FIGS. 5g to 5h illustrate percentage of flashovers as a function of ground resistance and insulation variations determined for first phase conductor positions of FIG. 5a with surge arresters connected to outer phase conductors in accordance with some embodiments of the present disclosure.
FIGS. 5i to 5j illustrate percentage of flashovers as a function of ground resistance and insulation variations determined for first phase conductor positions of FIG. 5a with surge arresters connected to all phase conductors in accordance with some embodiments of the present disclosure.
FIG. 6a shows an illustration of second phase conductor positions in accordance with some embodiments of the present disclosure.
FIGS. 6b to 6c illustrate percentage of flashovers as a function of ground resistance and insulation variations determined for second phase conductor positions of FIG. 6a in accordance with some embodiments of the present disclosure.
FIG. 7a shows an illustration of third phase conductor positions in accordance with some embodiments of the present disclosure.
FIG. 7b shows an illustration of third phase conductor positions with a shielding wire in accordance with some embodiments of the present disclosure.
FIGS. 7c to 7d illustrate percentage of flashovers as a function of ground resistance and insulation variations determined for third phase conductor positions of FIG. 7b with a shielding wire in accordance with some embodiments of the present disclosure.
FIGS. 7e to 7f illustrate percentage of flashovers as a function of ground resistance and insulation variations determined for third phase conductor positions of FIG. 7a with a surge arrester connected to a topmost phase conductor in accordance with some embodiments of the present disclosure.
FIG. 8 illustrates a block diagram of an exemplary computer system for implementing some embodiments of the present disclosure.

It should be appreciated by those skilled in the art that any block diagrams herein represent conceptual views of illustrative systems embodying the principles of the present subject matter. Similarly, it will be appreciated that any flowcharts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternatives falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

In the following detailed description of embodiments of the disclosure, reference is made to the accompanying drawings which illustrates specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

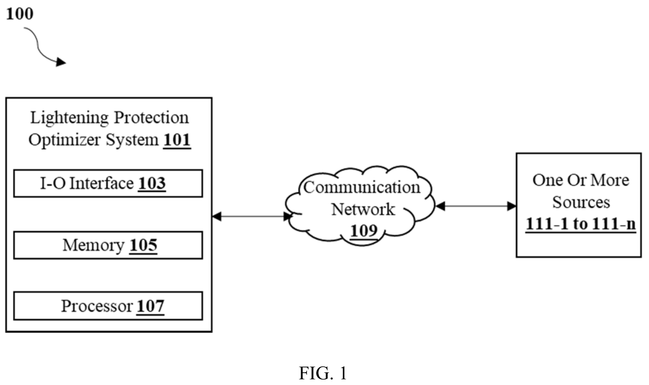

FIG. 1 illustrates an exemplary environment for optimizing lightning protection of overhead distribution lines and equipment in accordance with some embodiments of the present disclosure.

As shown in the FIG. 1, the environment 100 includes a lightning protection optimizer system 101, a communication network 109, and one or more sources 111-1 to 111-n. In an embodiment, the one or more sources 111-1 to 111-n comprises a database and/or a user device through which user input is provided. The lightning protection optimizer system 101 receives a plurality of overhead distribution system parameters related to an existing overhead distribution line structure from the one or more sources 111 using the communication network 109.

The communication network 109 may include, but is not limited to, a direct interconnection, an e commerce network, a Peer to Peer (P2P) network, Local Area Network (LAN), Wide Area Network (WAN), wireless network (for example, using Wireless Application Protocol), Internet, Wi Fi, Bluetooth, and the like.

The lightning protection optimizer system 101 includes an I-O interface 103, a memory 105, and a processor 107. The I-O interface 103 is configured to communicate with the one or more sources 111-1 to 111-n. The I-O interface 103 may employ communication protocols/methods such as, without limitation, audio, analog, digital, monaural, Radio Corporation of America (RCA) connector, stereo, IEEE^{®} 1394 high speed serial bus, serial bus, Universal Serial Bus (USB), infrared, Personal System/2 (PS/2) port, Bayonet Neill Concelman (BNC) connector, coaxial, component, composite, Digital Visual Interface (DVI), High Definition Multimedia Interface (HDMI^{®}), Radio Frequency (RF) antennas, S Video, Video Graphics Array (VGA), IEEE^{®} 802.11b/g/n/x, Bluetooth, cellular e.g., Code Division Multiple Access (CDMA), High Speed Packet Access (HSPA+), Global System for Mobile communications (GSM^{®}), Long Term Evolution (LTE^{®}), Worldwide interoperability for Microwave access (WiMax^{®}), or the like.

The memory 105 is communicatively coupled to the processor 107 of the lightning protection optimizer system 101. The memory 105, also, stores processor instructions which cause the processor 107 to execute the instructions for optimizing lightning protection of overhead distribution lines and equipment. The processor 107 may include at least one data processor for optimizing lightning protection of overhead distribution lines and equipment.

The one or more sources 111-1 to 111-n comprising the database stores data related to the plurality of overhead distribution system parameters, which relates to an existing overhead distribution line structure.

Hereafter, the operation of the lightning protection optimizer system 101 for optimizing lightning protection of overhead distribution lines and equipment is described.

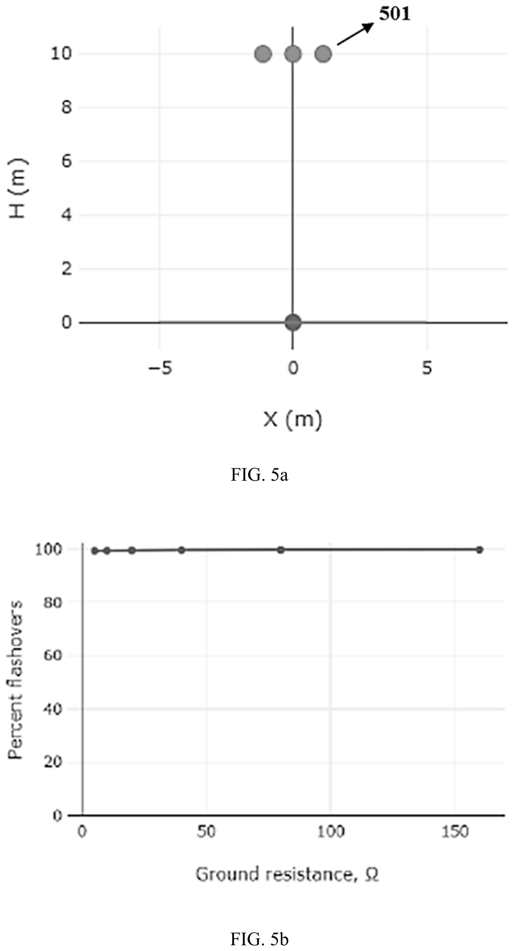

The lightning protection optimizer system 101 receives a plurality of overhead distribution system parameters related to an existing overhead distribution line structure from the database of one or more sources 111-1 to 111-n. In an embodiment, a user may provide the plurality of overhead distribution system parameters as a user input through a user device directly to the lightning protection optimizer system 101. The plurality of overhead distribution system parameters may include, without limitation, at least one of a phase conductor spacing distance, a span length, a line length, a pole ground installation frequency and resistance, ground flash density, the critical flashover voltage, an arrester deployment location and frequency, and a discharge voltage. Thereafter, the lightning protection optimizer system 101 may determine one or more output parameters based on the plurality of overhead distribution system parameters. The output parameters may include, without limitation, at least one of a number of flashes per year, flashovers per year, and percentage of flashes that convert into flashovers [flashover meaning high-voltage electric short circuit made through the air between exposed conductors]. Lastly, the lightning protection optimizer system 101 may determine at least one optimized lightning protection configuration for the existing overhead distribution line structure using at least one of the one or more output parameters, one or more surge arresters, a critical flashover voltage, and a shielding wire. The optimized lightning protection configuration comprises different types of system (explained with reference to FIGS. 5a to 7f) including the surge arrester for optimizing lightning protection of overhead distribution line and equipment.

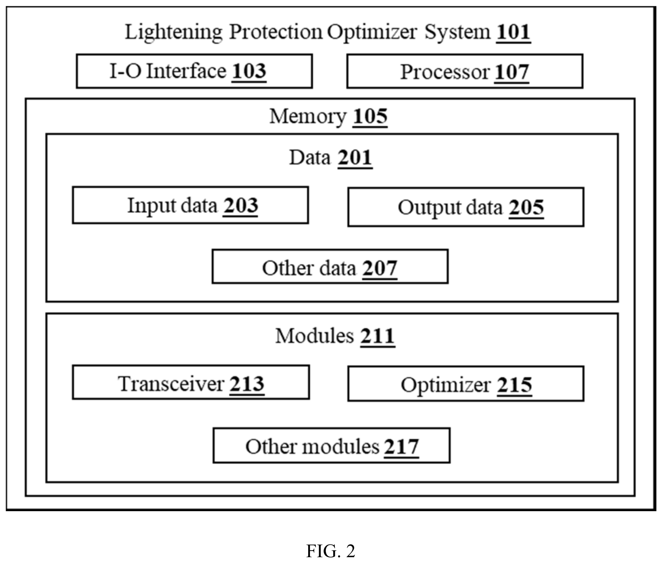

FIG. 2 shows a detailed block diagram of a lightning protection optimizer system in accordance with some embodiments of the present disclosure.

The lightning protection optimizer system 101, in addition to the I-O interface 103 and the processor 107 described above, includes data 201 and one or more modules 211, which are described herein in detail. In the embodiment, the data 201 is stored within the memory 105. The data 201 includes, for example, input data 203, output data 205 and other data 207.

The input data 203 stores the plurality of overhead distribution system parameters that includes at least one of a phase conductor spacing distance, a span length, a line length, a pole ground installation frequency and resistance, ground flash density, the critical flashover voltage, an arrester deployment location and frequency, and a discharge voltage.

The output data 205 stores output parameters that includes at least one of a number of flashes per year, flashovers per year, and percentage of flashes that convert into flashovers.

The other data 207 may store data, including temporary data and temporary files, generated by one or more modules 211 for performing the various functions of the lightning protection optimizer system 101.

In the embodiment, the data 201 in the memory 105 is processed by the one or more modules 211 present within the memory 105 of the lightning protection optimizer system 101. In the embodiment, the one or more modules 211 may be implemented as dedicated hardware units. As used herein, the term module refers to an application specific integrated circuit (ASIC), an electronic circuit, a field programmable gate arrays (FPGA), programmable system on chip (PSoC), a combinational logic circuit, and/or other suitable components that provide the described functionality. In some implementations, the one or more modules 211 are communicatively coupled to the processor 107 for performing one or more functions of the lightning protection optimizer system 101. The one or more modules 211 when configured with the functionality defined in the present disclosure will result in a novel hardware.

In one implementation, the one or more modules 211 include, but are not limited to, a transceiver 213, and an optimizer 215. The one or more modules 211, also, include other modules 217 to perform various miscellaneous functionalities of the lightning protection optimizer system 101.

The transceiver 213 may receive a plurality of overhead distribution system parameters related to an existing overhead distribution line structure from one or more sources 111-1 to 111-n. The plurality of overhead distribution system parameters comprises at least one of a phase conductor spacing distance, a span length, a line length, a pole ground installation frequency and resistance, ground flash density, the critical flashover voltage, an arrester deployment location and frequency, and a discharge voltage.

The optimizer 215 **determines one or more output parameters based on the plurality of overhead distribution system parameters.** The output parameters comprises at least one of a number of flashes per year, flashovers per year, and percentage of flashes that become flashovers. Thereafter, the optimizer 215 determines at least one optimized lightning protection configuration for the existing overhead distribution line structure using at least one of the one or more output parameters, one or more surge arresters, a critical flashover voltage, and a shielding wire.

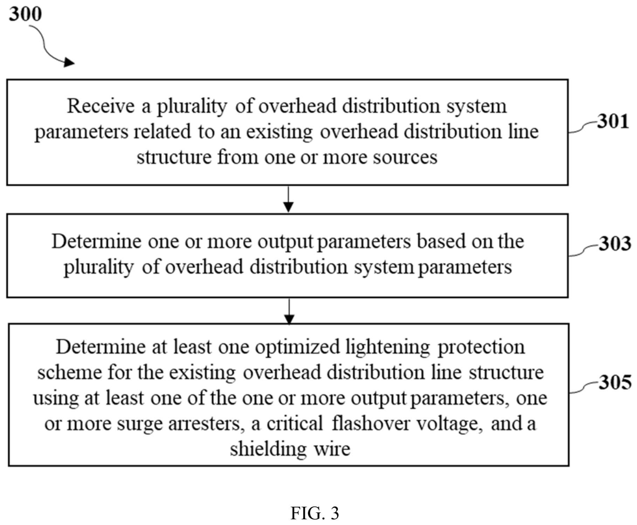

FIG. 3 illustrates a flowchart showing a method for optimizing lightning protection of overhead distribution lines and equipment in accordance with some embodiments of present disclosure.

As illustrated in FIG. 3, the method 300 includes one or more blocks for optimizing lightning protection of overhead distribution lines and equipment. The method 300 may be described in the general context of computer executable instructions. Generally, computer executable instructions can include routines, programs, objects, components, data structures, procedures, modules, and functions, which perform particular functions or implement particular abstract data types.

The order in which the method 300 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At block 301, the transceiver 213 of the lightning protection optimizer system 101 may receive a plurality of overhead distribution system parameters related to an existing overhead distribution line structure from one or more sources 111-1 to 111-n. The plurality of overhead distribution system parameters may include, without limitation, at least one of a phase conductor spacing distance, a span length, a line length, a pole ground installation frequency and resistance, ground flash density, the critical flashover voltage, an arrester deployment location and frequency, and a discharge voltage.

At block 303, the optimizer 215 of the lightning protection optimizer system 101 may determine one or more output parameters based on the plurality of overhead distribution system parameters. The output parameters may include, without limitation, at least one of a number of flashes per year, flashovers per year, and percentage of flashes that become flashovers.

At block 305, the optimizer 215 of the lightning protection optimizer system 101 may determine at least one optimized lightning protection configuration for the existing overhead distribution line structure using at least one of the one or more output parameters, one or more surge arresters, a critical flashover voltage, and a shielding wire.

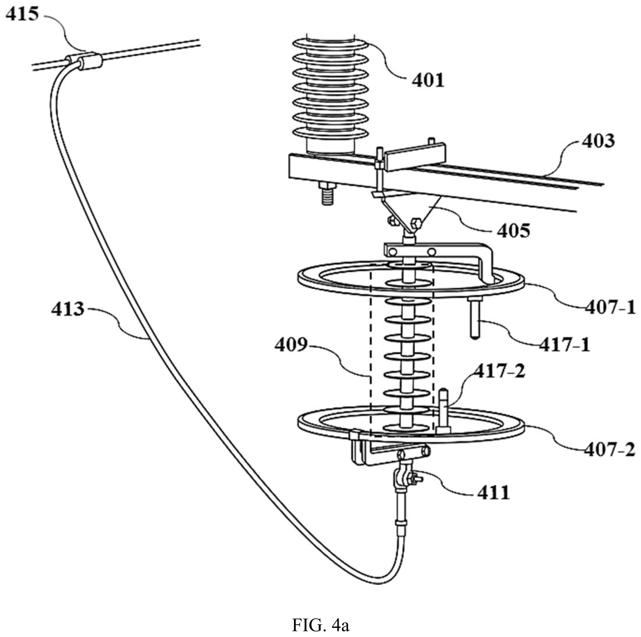

FIG. 4a shows an illustration of a surge arrester in accordance with some embodiments of the present disclosure.

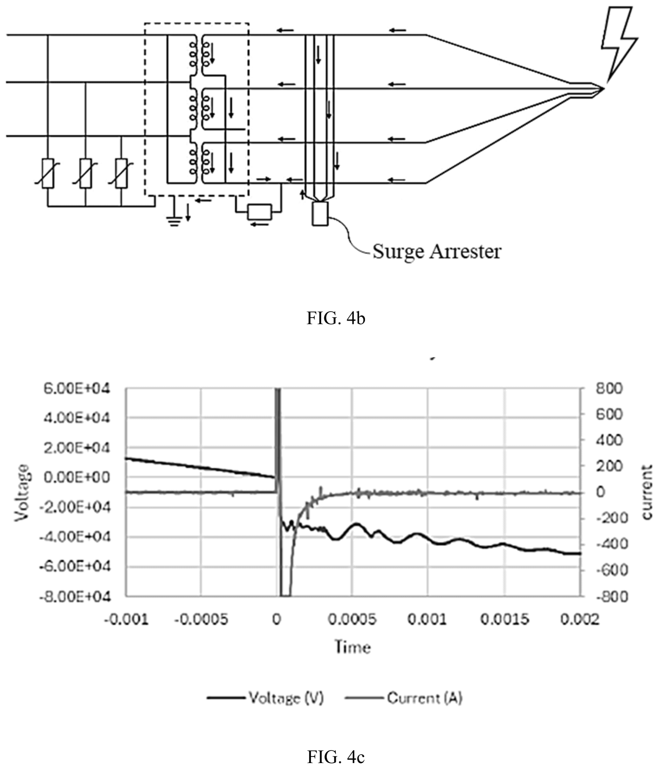

In FIG. 4a, the surge arrestor comprises a lightning arrester 409, and a **plurality of magnetic discharge rings** 407-1, 407-2. The lightning arrestor 409 may be one of, but not limited to, a rod gap lightning arrester, a valve type lightning arrester, or a metal oxide lightning arrester. A first end of the lightning arrester 409 is connected to a crossarm 403 of an electric pole (not shown in FIG. 4a) via an anchor shackle 405. A second end of the lightning arrester 409 is connected to a phase conductor of a plurality of phase conductors by a cable 413 via a machine bolt 411 and a parallel groove compression 415, as shown in FIG. 4a. A first magnetic discharge ring 407-1 of the plurality of magnetic discharge rings 407-1, 407-2 is connected to the first end of the lightning arrester 409. A second magnetic discharge ring 407-2 of the plurality of magnetic discharge rings 407-1, 407-2 is connected to the second end of the lightning arrester 409. Each of the first magnetic discharge ring 407-1 and the second magnetic discharge ring 407-2 is connected with a tap lead oriented towards each other i.e., the first magnetic discharge ring 407-1 is connected with the tap lead 417-1 and the second magnetic discharge ring 407-2 is connected with the tap lead 417-2. An orientation between the first magnetic discharge ring 407-1 and the second magnetic discharge ring 407-2 can be changed to obtain a required value of spark gap between the tap leads 417-1, 417-2. FIG. 4b shows a test circuit to test a surge arrester's recovery after an impulse in accordance with some embodiments of the present disclosure. The test circuit shows the surge arrester connected to a multi-phase distribution line. In an embodiment, the multi-phase distribution line may be any one of, but not limited to, a two-phase distribution line, or a three-phase distribution line. FIG. 4c shows a graph of a surge arrester's recovery after an impulse (to imitate lightning) of 53.4kA. This impulse/shot exceeded the surge arrester quenching limits in both peak current (by 267%) and coulombs (by 123%). The surge arrester of the present disclosure demonstrates 500µs quenching of current from a generator's trapped charge on this test circuit with no power follow current, shown in FIG. 4c.

FIG. 5a shows an illustration of first phase conductor positions in accordance with some embodiments of the present disclosure.

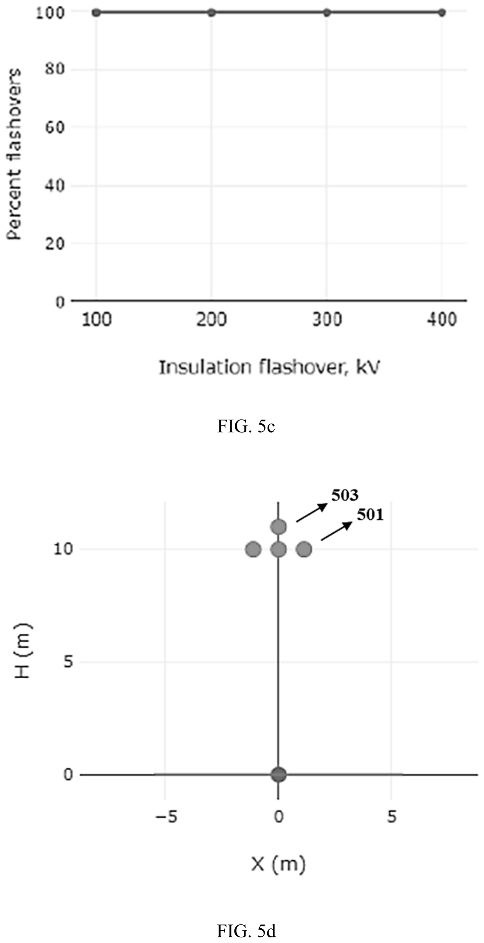

With reference to FIG. 5a, the first phase conductor positions 501 indicate the phase conductors are arranged in sequence along a direction perpendicular to the crossarm (not shown in FIG. 5a) of the electric pole i.e., each phase conductor of a plurality of phase conductors is separated from an adjacent phase conductor along a direction perpendicular to the crossarm of the electric pole. A multi-phase distribution line is mounted on the electric pole comprising a plurality of phase conductors. In an embodiment, the lightning protection optimizer system 101 receives a plurality of overhead distribution system parameters related to an existing overhead distribution line structure from one or more sources 111-1 to 111-n. In this case, the existing overhead distribution line structure is representative of the first phase conductor positions 501, as shown in FIG. 5a and the plurality of overhead distribution system parameters are related to the first phase conductor positions 501. The lightning protection optimizer system 101 determines one or more output parameters based on the plurality of overhead distribution system parameters. For instance, the plurality of overhead distribution system parameters may be the span length of 80m, the line length of 100km, the critical flashover voltage of 200kV, the arrester 10kA discharge voltage of 110kV, the ground resistance of 20Ω, and the ground flash density of 12 flashes per km per year. Using these parameters, the lightning protection optimizer system 101 determines/estimates the number of system flashovers to be 145.28, indicating that 99.8% of the total number of flashes would lead to a flashover, as shown in FIG. 5b. It is also known that the ground resistance can be highly variable in the mountainous regions of Abha due to the rocky terrain increasing ground resistance and the prevalence of ground wire theft. In most cases, the ground resistance has been found to be much higher than the ground resistance considered here for estimation. However, improved ground resistance may not mitigate in reducing the number of system flashovers as most of these flashes would be from a center phase conductor to an outer phase conductor. For the same reason, increasing the critical flashover voltage also may not improve performance in terms of reducing the number of system flashovers, as determined by the lightning protection optimizer system 101 in FIG. 5c.

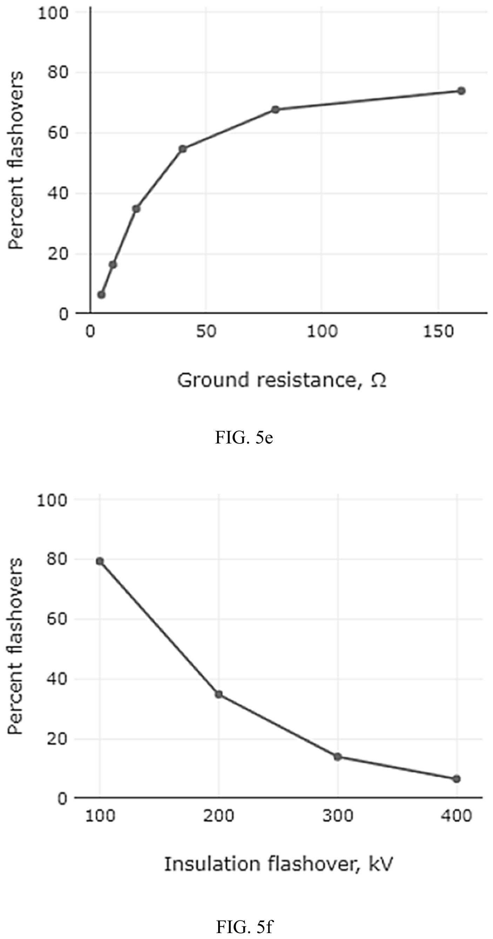

A common method of protecting overhead distribution lines and equipment from lightning is by using a static shielding wire. In some embodiments, a configuration/scheme is presented in FIG. 5d with the first phase conductor positions 501 with a shielding wire 503. This shielding/grounded wire 503 is installed above the phase conductors and is most susceptible to lightning strike due to its height. By locating a shielding wire one meter above the center phase conductor, the lightning protection optimizer system 101 estimates/determines that the number of flashovers is reduced to 50.95 flashovers per year, or 34.9% of flashes result in a flashover, shown in FIG. 5e. However, the effectiveness of the shielding wire depends on having good ground at every electric pole. The lightning protection optimizer system 101 estimates/determines that doubling the required 20Ω ground resistance to 40Ω more than doubles the likelihood of flashover, exceeding 50%, shown in FIG. 5e. Depending on the ground resistance, the effectiveness of lightning performance could also be improved by increasing the critical flashover voltage from 200kV to 300kV, as estimated/determined by the lightning protection optimizer system 101 in FIG. 5f.

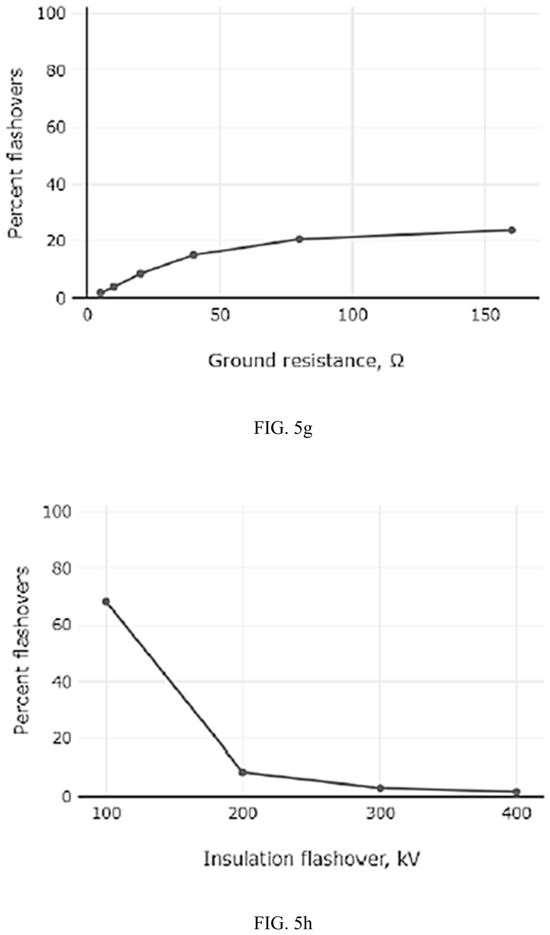

In some embodiments, another configuration/scheme to improve the lightning protection of overhead distribution lines and equipment comprises applying the surge arresters of the present disclosure as shown in FIG. 4a to the outer phase conductors as these phase conductors are most likely to get struck by lightning compared to the centre phase conductor. The lightning protection optimizer system 101 estimates/determines that with a 20Ω ground resistance, the percentage of flashovers drops from 99.8% to 8.6%, shown in FIG. 5g. However, there are many structures with a ground resistance that is much higher, suggesting that actual percentage of flashovers would be greater than 20%. Further, the lightning protection optimizer system 101 estimates/determines that increasing the insulation between the phase conductors and the grounded crossarm reduces the percentage of flashovers, as shown in FIG. 5h. For instance, using insulators with a critical flashover voltage of 300kV reduces the percentage of flashovers to approximately 3.0%, given a ground resistance of 20Ω.

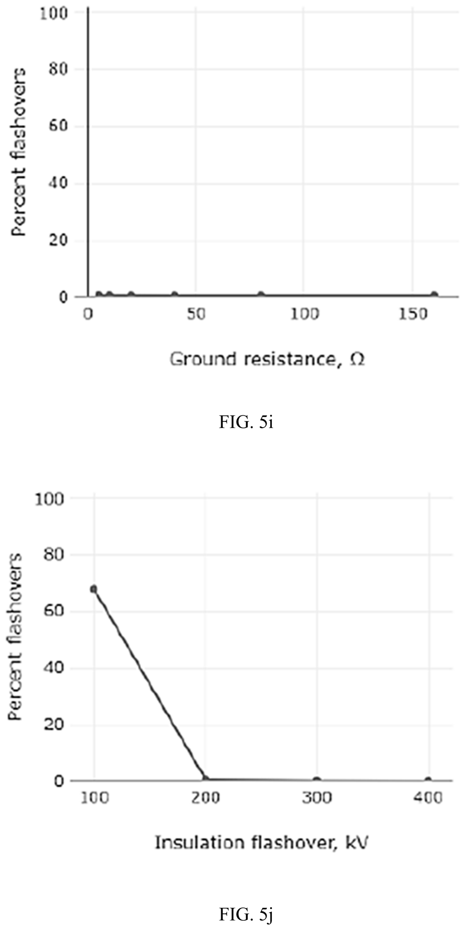

In some embodiments, another configuration/scheme to improve the lightning protection of overhead distribution lines and equipment is to apply surge arresters to all phase conductors. In detail, a system for optimizing lightning protection of overhead distribution lines and equipment comprises a plurality of surge arresters wherein each surge arrester of the plurality of surge arresters is connected to each individual phase conductor of a multi-phase distribution line on an electric pole. Each surge arrester of the plurality of surge arresters corresponds to the surge arrester of the present disclosure as shown in FIG. 4a. Equipping all three phase conductors with the surge arresters of the present disclosure as shown in FIG. 4a, the lightning protection optimizer system 101 estimates/determines that the percentage of flashovers reduces to 0.6%, shown in FIG. 5i, and using insulators with a critical flashover voltage of 200kV or above reduces the percentage of flashovers to almost 0%, shown in FIG. 5j.

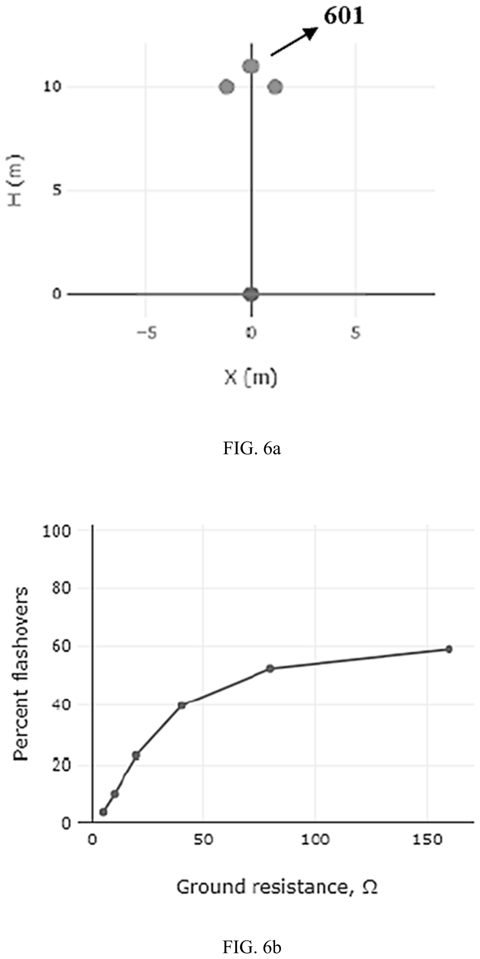

FIG. 6a shows an illustration of second phase conductor positions in accordance with some embodiments of the present disclosure.

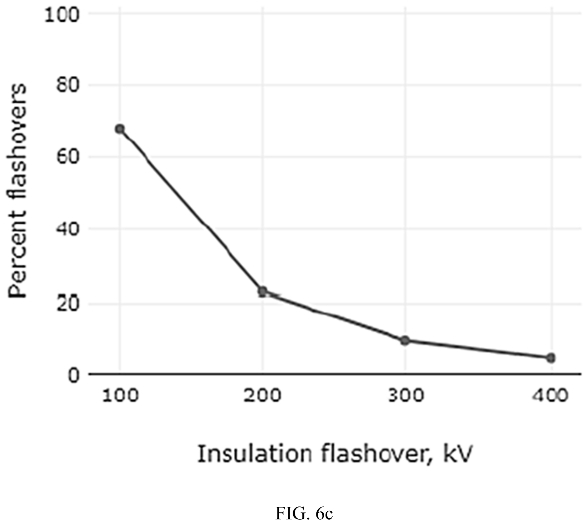

With reference to FIG. 6a, the second phase conductor positions 601 indicate the centre phase conductor is elevated above the outer phase conductors to provide some shielding i.e., one of the plurality of phase conductors is arranged at a first plane and rest of the phase conductors of the plurality of phase conductors are oriented at a second plane parallel to the first plane on a crossarm of the electric pole(not shown in FIG. 6a) and the first plane is oriented away from the crossarm and the second plane is oriented proximally to the crossarm. A multi-phase distribution line is mounted on the electric pole comprises the plurality of phase conductors. In an embodiment, the lightning protection optimizer system 101 receives a plurality of overhead distribution system parameters related to an existing overhead distribution line structure from one or more sources 111-1 to 111-n. In this case, the existing overhead distribution line structure is representative of the second phase conductor positions 601, as shown in FIG. 6a and the plurality of overhead distribution system parameters are related to the second phase conductor positions 601. The lightning protection optimizer system 101 determines one or more output parameters based on the plurality of overhead distribution system parameters. For instance, the plurality of overhead distribution system parameters may be the span length of 80m, the line length of 100km, the critical flashover voltage of 200kV, the arrester 10kA discharge voltage of 110kV, the ground resistance of 20Ω, and the ground flash density of 12 flashes per km per year. The centre phase conductor may be located, but not limited to, one meter above the rest of the phase conductors and connected with the surge arrester of the present disclosure as shown in FIG. 4a. Given these parameters, the lightning protection optimizer system 101 determines/estimates reduction in the percentage of flashovers to 23%, shown in FIG. 6b. Depending on the ground resistance, the effectiveness of lightning performance could also be improved by increasing the critical flashover voltage from 200kV to 400kV, as estimated/determined by the lightning protection optimizer system 101 in FIG. 6c.

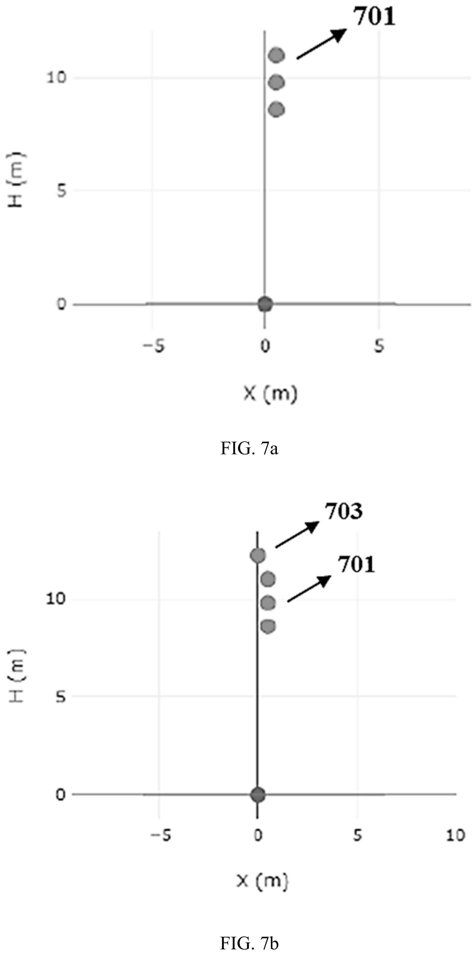

FIG. 7a shows an illustration of third phase conductor positions in accordance with some embodiments of the present disclosure.

With reference to FIG. 7a, the third phase conductor positions 701 indicate the phase conductors are arranged vertically in sequence along a direction perpendicular to an electric pole (not shown in FIG. 7a) i.e., each phase conductor of the plurality of phase conductors is separated from an adjacent phase conductor along a direction perpendicular to the electric pole. A multi-phase distribution line mounted on the electric pole comprises the plurality of phase conductors. In an embodiment, the lightning protection optimizer system 101 receives a plurality of overhead distribution system parameters related to an existing overhead distribution line structure from one or more sources 111-1 to 111-n. In this case, the existing overhead distribution line structure is representative of the third phase conductor positions 701, as shown in FIG. 7a and the plurality of overhead distribution system parameters are related to the third phase conductor positions 701. The lightning protection optimizer system 101 may determine one or more output parameters based on the plurality of overhead distribution system parameters. For instance, the plurality of overhead distribution system parameters may be the span length of 80m, the line length of 100km, the critical flashover voltage of 200kV, the arrester 10kA discharge voltage of 110 kV, the ground resistance of 20Ω, and the ground flash density of 12 flashes per km per year. Each phase conductor may be located, but not limited to, at one meter distance above the adjacent phase conductor. Given these parameters, the lightning protection optimizer system 101 determines/estimates that 99.8% of flashes results in a flashover, and that all the flashes would strike the highest conductor (not shown). This scenario is not affected by ground resistance or critical flashover voltage improvements, as the flashover would take place between the highest phase conductor and the center phase conductor.

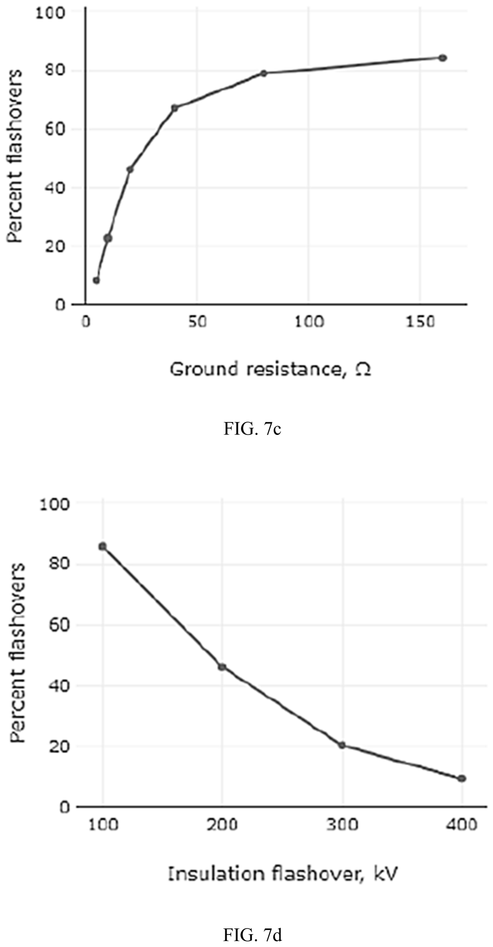

A common method of protecting overhead distribution lines and equipment from lightning is by using a static shielding wire. In some embodiments, the configuration/scheme is presented in FIG. 7b with the third phase conductor positions 701 with a shielding wire 703. This shielding/grounded wire 703 is installed above the phase conductors and is most susceptible to lightning strike due to its height. By locating a shielding wire at least one meter above (for instance i.e., 1.2m) the center phase conductor, the lightning protection optimizer system 101 estimates/determines that the number of flashovers is reduced to approximately 69 flashovers per year, or 46.3% of flashes result in a flashover, shown in FIG. 7c. However, the effectiveness of the shielding wire depends on having good ground at every electric pole. Depending on the ground resistance, the effectiveness of lightning performance could also be improved by increasing the critical flashover voltage from 200kV to 400kV, as estimated/determined by the lightning protection optimizer system 101 in FIG. 7d.

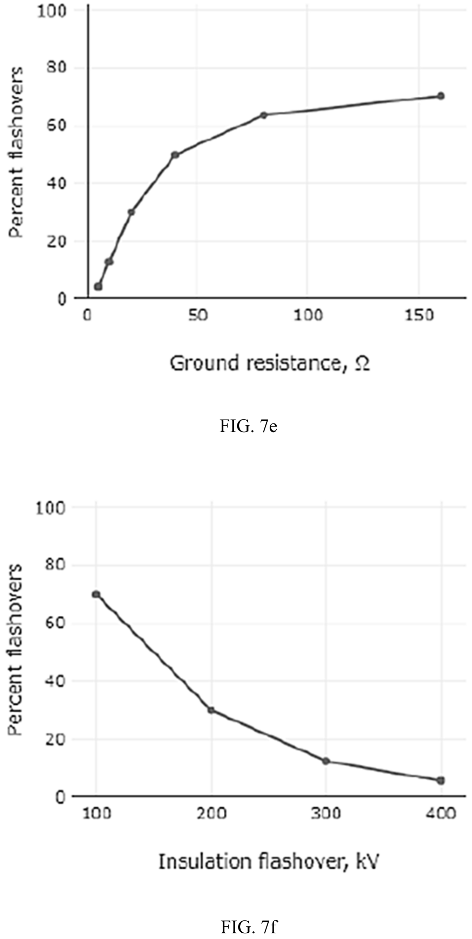

In some embodiments, another configuration/scheme to improve the lightning protection of overhead distribution lines and equipment is to apply surge arrester to the topmost/highest phase conductor i.e., a surge arrester is connected to one phase conductor of the multi-phase distribution line, wherein the one phase conductor is proximal to a top end of the electric pole (not shown). Equipping the topmost phase conductor with the surge arrester of the present disclosure as shown in FIG. 4a, the lightning protection optimizer system 101 estimates/determines that the number of flashovers is reduced to approximately 44 flashovers per year, or 30.1% of flashes result in a flashover, shown in FIG. 7e, and using insulators with a critical flashover voltage of 200kV or above reduces the percentage of flashovers, shown in FIG. 7f.

Some of the technical advantages of the present disclosure are listed below.

The lightning protection optimizer system of the present disclosure indicates that the existing overhead distribution line structure using tangent configuration or vertical configuration flashover nearly every time there is a direct lightning strike. By providing different optimized lightning protection scheme for the existing overhead distribution line structure, the lightning protection optimizer system provides practical solutions to overcome lightning caused outages on the overhead distribution system.

The surge arrester of the present disclosure provides fast quenching of surge current, thereby, significantly reducing the possibility of lightning caused outages on the overhead distribution system.

Some of the clauses are mentioned below.
[1]: A surge arrester comprising a lightning arrester with a first end connected to a crossarm of an electric pole and a second end connected to a phase conductor by a cable; and a plurality of magnetic discharge rings, wherein a first magnetic discharge ring of the plurality of magnetic discharge rings is connected to the first end of the lightning arrester and a second magnetic discharge ring of the plurality of magnetic discharge rings is connected to the second end of the lightning arrester, wherein each of the first magnetic discharge ring and the second magnetic discharge ring is connected with a tap lead oriented towards each other.
[2]: A system for optimizing lightning protection of overhead distribution lines and equipment, comprising a multi-phase distribution line mounted on an electric pole comprising a plurality of phase conductors; and a plurality of surge arresters, wherein each surge arrester of the plurality of surge arresters is connected to each individual phase conductor of the plurality of phase conductors, wherein each surge arrester of the plurality of surge arresters comprises: a lightning arrester with a first end connected to a crossarm of the electric pole and a second end connected to a phase conductor by a cable; and a plurality of magnetic discharge rings, wherein a first magnetic discharge ring of the plurality of magnetic discharge rings is connected to the first end of the lightning arrester and a second magnetic discharge ring of the plurality of magnetic discharge rings is connected to the second end of the lightning arrester, wherein each of the first magnetic discharge ring and the second magnetic discharge ring is connected with a tap lead oriented towards each other.
[3]: The system described in [2], wherein each phase conductor of the plurality of phase conductors is separated from an adjacent phase conductor along a direction perpendicular to the crossarm of the electric pole.
[4]: A system for optimizing lightning protection of overhead distribution lines and equipment, comprising a multi-phase distribution line mounted on an electric pole comprising a plurality of phase conductors, wherein one of the plurality of phase conductors is arranged at a first plane and rest of the phase conductors of the plurality of phase conductors are oriented at a second plane parallel to the first plane on a crossarm of the electric pole; and a surge arrester connected to the one of the plurality of phase conductors arranged at the first plane, wherein the surge arrester comprises a lightning arrester with a first end connected to a crossarm of the electric pole and a second end connected to a center phase conductor by a cable; and a plurality of magnetic discharge rings, wherein a first magnetic discharge ring of the plurality of magnetic discharge rings is connected to the first end of the lightning arrester and a second magnetic discharge ring of the plurality of magnetic discharge rings is connected to the second end of the lightning arrester, wherein each of the first magnetic discharge ring and the second magnetic discharge ring is connected with a tap lead oriented towards each other.
[5]: The system described in [4], wherein the first plane is oriented away from the crossarm and the second plane is ordinated proximally to the crossarm.
[6]: A system for optimizing lightning protection of overhead distribution lines and equipment, comprising a multi-phase distribution line mounted on an electric pole comprising a plurality of phase conductors, wherein each phase conductor of the plurality of phase conductors is separated from an adjacent phase conductor along a direction perpendicular to the electric pole; and a surge arrester is connected to one phase conductor of the plurality of phase conductors, wherein the one phase conductor is proximal to a top end of the electric pole, wherein the surge arrester comprises a lightning arrester with a first end connected to a crossarm of the electric pole and a second end connected to the one phase conductor by a cable; and a plurality of magnetic discharge rings, wherein a first magnetic discharge ring of the plurality of magnetic discharge rings is connected to the first end of the lightning arrester and a second magnetic discharge ring of the plurality of magnetic discharge rings is connected to the second end of the lightning arrester, wherein each of the first magnetic discharge ring and the second magnetic discharge ring is connected with a tap lead oriented towards each other.
[7]: The system described in [6], further comprising a shielding wire oriented between the top end of the electric pole and the one phase conductor of the multi-phase distribution line.
[8]: A method for optimizing lightning protection of overhead distribution lines and equipment, comprising receiving a plurality of overhead distribution system parameters related to an existing overhead distribution line structure from one or more sources; determining one or more output parameters based on the plurality of overhead distribution system parameters; and determining at least one optimized lightning protection configuration for the existing overhead distribution line structure using at least one of the one or more output parameters, one or more surge arresters, a critical flashover voltage, and a shielding wire.
[9]: The method described in [8], wherein the plurality of overhead distribution system parameters comprises at least one of a phase conductor spacing distance, a span length, a line length, a pole ground installation frequency and resistance, ground flash density, the critical flashover voltage, an arrester deployment location and frequency, and a discharge voltage.
[10]: The method described in [8], wherein output parameters comprise at least one of a number of flashes per year, flashovers per year, and percentage of flashes that become flashovers.
[11]: A lightning protection optimizer system for optimizing lightning protection of overhead distribution lines and equipment, comprising a processor, and a memory communicatively coupled to the processor, wherein the memory stores processor executable instructions, which on execution, cause the processor to receive a plurality of overhead distribution system parameters related to an existing overhead distribution line structure from one or more sources; determine one or more output parameters based on the plurality of overhead distribution system parameters; and determine at least one optimized lightning protection configuration for the existing overhead distribution line structure using at least one of the one or more output parameters, one or more surge arresters, a critical flashover voltage, and a shielding wire.

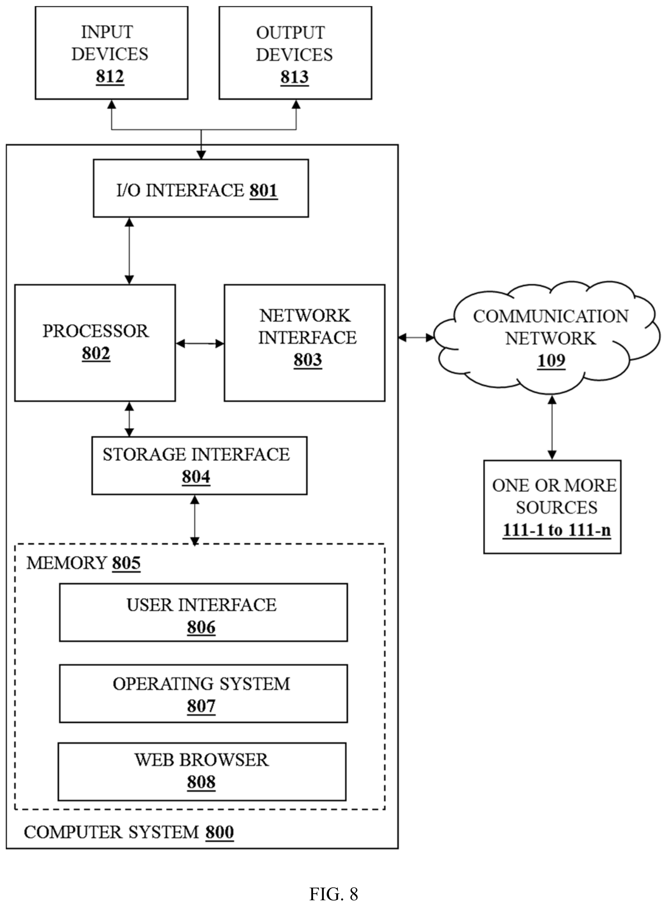

FIG. 8 illustrates a block diagram of an exemplary computer system for implementing some embodiments of the present disclosure.

In an embodiment, the computer system 800 may be used to implement the lightning protection optimizer system 101. The computer system 800 may include a central processing unit ("CPU" or "processor") 802. The processor 802 may include at least one data processor for optimizing lightning protection of overhead distribution lines and equipment. The processor 802 may include specialized processing units such as, integrated system (bus) controllers, memory management control units, floating point units, graphics processing units, digital signal processing units, etc.

The processor 802 may be disposed in communication with one or more input/output (I/O) devices (not shown in FIG. 8) via I/O interface 801. The I/O interface 801 employ communication protocols/methods such as, without limitation, audio, analog, digital, monaural, Radio Corporation of America (RCA) connector, stereo, IEEE^{®}-1394 high speed serial bus, serial bus, Universal Serial Bus (USB), infrared, Personal System/2 (PS/2) port, Bayonet Neill-Concelman (BNC) connector, coaxial, component, composite, Digital Visual Interface (DVI), High-Definition Multimedia Interface (HDMI^{®}), Radio Frequency (RF) antennas, S-Video, Video Graphics Array (VGA), IEEE^{®} 802.11b/g/n/x, Bluetooth, cellular e.g., Code-Division Multiple Access (CDMA), High-Speed Packet Access (HSPA+), Global System for Mobile communications (GSM^{®}), Long-Term Evolution (LTE^{®}), Worldwide interoperability for Microwave access (WiMax^{®}), or the like.

Using the I/O interface 801, the computer system 800 may communicate with one or more I/O devices such as input devices 812 and output devices 813. For example, the input devices 812 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output devices 813 may be a printer, fax machine, video display (e.g., cathode ray tube (CRT), liquid crystal display (LCD), light-emitting diode (LED), plasma, plasma display panel (PDP), organic light-emitting diode display (OLED) or the like), audio speaker, etc.

In some embodiments, the computer system 800 consists of the lightning protection optimizer system 101. The processor 802 may be disposed in communication with the communication network 109 via a network interface 803. The network interface 803 may communicate with the communication network 109. The network interface 803 may employ connection protocols including, without limitation, direct connect, Ethernet (e.g., twisted pair 10/100/1000 Base T), transmission control protocol/internet protocol (TCP/IP), token ring, IEEE^{®} 802.11a/b/g/n/x, etc. The communication network 109 may include, without limitation, a direct interconnection, local area network (LAN), wide area network (WAN), wireless network (e.g., using Wireless Application Protocol), the Internet, etc. Using the network interface 803 and the communication network 109, the computer system 800 may communicate with the one or more sources 111-1 to 111-n. The network interface 803 may employ connection protocols include, but not limited to, direct connect, ethernet (e.g., twisted pair 10/100/1000 Base T), transmission control protocol/internet protocol (TCP/IP), token ring, IEEE^{®} 802.11a/b/g/n/x, etc.

The communication network 109 includes, but is not limited to, a direct interconnection, a peer to peer (P2P) network, local area network (LAN), wide area network (WAN), wireless network (e.g., using wireless application protocol), the internet, Wi-Fi, and such.

In some embodiments, the processor 802 may be disposed in communication with a memory 805 (e.g., RAM, ROM, etc. not shown in FIG. 8) via a storage interface 804. The storage interface 804 may connect to memory 805 including, without limitation, memory drives, removable disc drives, etc., employing connection protocols such as, serial advanced technology attachment (SATA), integrated drive electronics (IDE), IEEE^{®}-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory 805 may store a collection of program or database components, including, without limitation, user interface 806, an operating system 807, etc. In some embodiments, computer system 800 may store user/application data, such as, the data, variables, records, etc., as described in this disclosure. Such databases may be implemented as fault-tolerant, relational, scalable, secure databases such as Oracle or Sybase.

The operating system 807 may facilitate resource management and operation of the computer system 800. Examples of operating systems include, without limitation, APPLE^{®} MACINTOSH^{®} OS X^{®}, UNIX^{®}, UNIX-like system distributions (E.G., BERKELEY SOFTWARE DISTRIBUTION^{®} (BSD), FREEBSD^{®}, NETBSD^{®}, OPENBSD, etc.), LINUX^{®} DISTRIBUTIONS (E.G., RED HAT^{®}, UBUNTU^{®}, KUBUNTU^{®}, etc.), IBM^{®}OS/2^{®}, MICROSOFT^{®} WINDOWS^{®} (XP^{®}, VISTA^{®}/7/8, 10 etc.), APPLE^{®} IOS^{®}, GOOGLE^{™} ANDROID^{™}, BLACKBERRY^{®} OS, or the like.

In some embodiments, the computer system 800 may implement web browser 808 stored program components. Web browser 808 may be a hypertext viewing application, such as MICROSOFT^{®} INTERNET EXPLORER^{®}, GOOGLE^{™} CHROME^{™}, MOZILLA^{®} FIREFOX^{®}, APPLE^{®} SAFARI^{®}, etc. Secure web browsing may be provided using secure hypertext transport protocol (HTTPS), secure sockets layer (SSL), transport layer security (TLS), etc. Web browser 808 may utilize facilities such as AJAX, DHTML, ADOBE^{®} FLASH^{®}, JAVASCRIPT^{®}, JAVA^{®}, application programming interfaces (APIs), etc. The computer system 800 may implement a mail server (not shown in FIG. 8) stored program component. The mail server may be an internet mail server such as microsoft exchange, or the like. The mail server may utilize facilities such as ASP, ACTIVEX^{®}, ANSI^{®} C++/C#, MICROSOFT^{®}, .NET, CGI SCRIPTS, JAVA^{®}, JAVASCRIPT^{®}, PERL^{®}, PHP, PYTHON^{®}, WEBOBJECTS^{®}, etc. The mail server may utilize communication protocols such as internet message access protocol (IMAP), messaging application programming interface (MAPI), MICROSOFT^{®} exchange, post office protocol (POP), simple mail transfer protocol (SMTP), or the like. The computer system 800 may implement a mail client (not shown in FIG. 8) stored program component. The mail client may be a mail viewing application, such as APPLE^{®} MAIL, MICROSOFT^{®} ENTOURAGE^{®}, MICROSOFT^{®} OUTLOOK^{®}, MOZILLA^{®} THUNDERBIRD^{®}, etc.

One or more computer readable storage media may be utilized in implementing embodiments consistent with the present disclosure. A computer readable storage medium refers to any type of physical memory on which information or data readable by a processor may be stored. Thus, a computer readable storage medium stores instructions for execution by one or more processors, including instructions for causing the processor(s) to perform steps or stages consistent with the embodiments described herein. The term "computer readable medium" should be understood to include tangible items and exclude carrier waves and transient signals, i.e., be non-transitory. Examples include random access memory (RAM), read only memory (ROM), volatile memory, non-volatile memory, hard drives, CD ROMs, DVDs, flash drives, disks, and any other known physical storage media.

The described operations may be implemented as a method, an individual unit, system or article of manufacture using standard programming and/or engineering techniques to produce software, firmware, hardware, or any combination thereof. The described operations may be implemented as code maintained in a "non-transitory computer readable medium", where a processor may read and execute the code from the computer readable medium. The processor is at least one of a microprocessor and a processor capable of processing and executing the queries. A non-transitory computer readable medium may include media such as magnetic storage medium (e.g., hard disk drives, floppy disks, tape and the like), optical storage (CD ROMs, DVDs, optical disks and the like), volatile and non-volatile memory devices (e.g., EEPROMs, ROMs, PROMs, RAMs, DRAMs, SRAMs, Flash Memory, firmware, programmable logic and the like) and the like. Further, non-transitory computer readable media include all computer readable media except for a transitory. The code implementing the described operations may further be implemented in hardware logic (e.g., an integrated circuit chip, programmable gate array (PGA), application specific integrated circuit (ASIC) and the like).

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary, a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of FIG. 3 show certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the scope being indicated by the following claims.

### REFERRAL NUMERALS:

| **Reference number** | **Description** |
|---|---|
| 100 | Environment |
| 101 | Lightning protection optimizer system |
| 103 | I-O interface |
| 105 | Memory |
| 107 | Processor |
| 109 | Communication network |
| 111-1 to 111-n | One or more sources |
| 201 | Data |
| 203 | Input data |
| 205 | Output data |
| 207 | Other data |
| 211 | Modules |
| 213 | Transceiver |
| 215 | Optimizer |
| 217 | Other modules |
| 401 | Line post insulator |
| 403 | Crossarm |
| 405 | Anchor shackle |
| 407-1, 407-2 | Magnetic discharge ring |
| 409 | Lightning arrester |
| 411 | Machine bolt |
| 413 | Cable |
| 415 | Parallel groove compression |
| 417-1, 417-2 | Tap lead |
| 800 | Computer system |
| 801 | I/O interface |
| 802 | Processor |
| 803 | Network interface |
| 804 | Storage interface |
| 805 | Memory |
| 806 | User interface |
| 807 | Operating system |
| 808 | Web browser |
| 812 | Input devices |
| 813 | Output devices |

## Claims

1. A surge arrester comprising:
a lightning arrester (409) with a first end connected to a crossarm (403) of an electric pole and a second end connected to a phase conductor by a cable (413); and
a plurality of magnetic discharge rings (407-1, 407-2), wherein a first magnetic discharge ring (407-1) of the plurality of magnetic discharge rings (407-1, 407-2) is connected to the first end of the lightning arrester (409) and a second magnetic discharge ring (407-2) of the plurality of magnetic discharge rings (407-1, 407-2) is connected to the second end of the lightning arrester (409), wherein each of the first magnetic discharge ring (407-1) and the second magnetic discharge ring (407-2) is connected with a tap lead (417-1, 417-2) oriented towards each other to form a spark gap, and wherein an orientation between the first magnetic discharge ring (407-1) and the second magnetic discharge ring (407-2) is changed to obtain a required value of spark gap between the tap leads (417-1, 417-2).

2. A system (101) for optimizing lightning protection of overhead distribution lines and equipment, comprising:
a multi-phase distribution line mounted on an electric pole comprising a plurality of phase conductors; wherein one of the plurality of phase conductors is arranged at a first plane and rest of the phase conductors of the plurality of phase conductors are oriented at a second plane parallel to the first plane on a crossarm (403) of the electric pole; and
a plurality of surge arresters, wherein each surge arrester of the plurality of surge arresters is connected to each individual phase conductor of the plurality of phase conductors, and wherein equipping all phase conductors with the surge arresters reduces the percentage of flashes that convert into flashovers to 0.6%.
wherein each surge arrester of the plurality of surge arresters comprises:
a lightning arrester (409) with a first end connected to a crossarm (403) of the electric pole and a second end connected to a phase conductor by a cable; and
a plurality of magnetic discharge rings (407-1, 407-2), wherein a first magnetic discharge ring (407-1) of the plurality of magnetic discharge rings (407-1, 407-2) is connected to the first end of the lightning arrester (409) and a second magnetic discharge ring (407-2) of the plurality of magnetic discharge rings (407-1, 407-2) is connected to the second end of the lightning arrester (409), wherein each of the first magnetic discharge ring (407-1) and the second magnetic discharge ring (407-2) is connected with a tap lead (417-1, 417-2) oriented towards each other.

3. The system (101) of claim 2, wherein each phase conductor of the plurality of phase conductors is separated from an adjacent phase conductor along a direction perpendicular to the crossarm (403) of the electric pole.

4. The system (101) of claim 2, wherein the first plane is oriented away from the crossarm (403) and the second plane is oriented proximally to the crossarm (403).

5. The system (101) of claim 2, further comprising:
a shielding wire oriented between the top end of the electric pole and the one phase conductor of the multi-phase distribution line.

6. A method for optimizing lightning protection of overhead distribution lines and equipment, comprising:
receiving (301) a plurality of overhead distribution system parameters related to an existing overhead distribution line structure from one or more sources (111-1 to 111-n);
determining (303) one or more output parameters based on the plurality of overhead distribution system parameters; and
determining (305) at least one optimized lightning protection configuration for the existing overhead distribution line structure using at least one of the one or more output parameters, one or more surge arresters, a critical flashover voltage, and a shielding wire, wherein the surge arrester demonstrates current from a generator's trapped charge with no power follow current.

7. The method of claim 6, wherein the plurality of overhead distribution system parameters comprises at least one of a phase conductor spacing distance, a span length, a line length, a pole ground installation frequency and resistance, ground flash density, the critical flashover voltage, an arrester deployment location and frequency, and a discharge voltage.

8. The method of claim 6, wherein output parameters comprise at least one of a number of flashes per year, flashovers per year, and percentage of flashes that become flashovers.
